Europäisches Patentamt

European Patent Office

Office européen des brevets

(19)

(11) Publication number: **0 291 959**
**A2**

# EUROPEAN PATENT APPLICATION

(21) Application number: 88107970.1

(22) Date of filing: 18.05.88

(51) Int. Cl.4: **G01N 23/06** , **B07C 5/34**

(30) Priority: 19.05.87 IT 2057587

(43) Date of publication of application:
**23.11.88 Bulletin 88/47**

(84) Designated Contracting States:
**AT BE CH DE ES FR GB LI NL SE**

(71) Applicant: ISTITUTO GUIDO DONEGANI S.p.A.
**Via Caduti del Lavoro**
**I-28100 Novara(IT)**

(72) Inventor: **Giunchi, Giovanni, Dr.phys.**
**15, via Don Gallotti**
**I-28100 Novara(IT)**
Inventor: **Pieri, Giovanni**
**2, via Podgora**
**I-28100 Novara(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) Method for the separation of manufactured articles of plastic materials and apparatus suitable for this purpose.

(57) Method for the separation of manufactured articles of plastic materials comprising:

(a) sending the manufactured articles singly to an irradiation zone;

(b) irradiating each single manufactured article by an electromagnetic irradiation beam; and

(c) directing to different destinations the manufactured articles according to their adsorption or absorption of the electromagnetic radiation.

EP 0 291 959 A2

# METHOD FOR THE SEPARATION OF MANUFACTURED ARTICLES OF PLASTIC MATERIALS AND APPARATUS SUITABLE FOR THIS PURPOSE

The present invention relates to a method for the separation of manufactured articles of plastic materials and to apparatus suitable for this purpose.

More particularly, the present invention relates to a method for the separation of manufactured articles of plastic materials having similar densities and different chemical compositions.

As is well known, the automatic separation of waste plastic materials into portions showing the same chemical nature has tremendous importance, either for the recovery of the different plastic materials for recycling or for an optional burning which can be performed only after having separated the plastic material that result in toxic substances upon combustion.

In fact, it is well known that some plastics such as for instance polyolefins plastics, having a density much lower than that of polyester plastics, may be easily separated from the latter by flotation in liquids having a suitable density; on the contrary, this separation method cannot be applied to mixtures of polyester materials and halogenated resin materials because these products have similar densities.

It has now been found, in accordance with the present invention, that the above-mentioned drawback can be overcome by a method for the separation of manufactured articles of plastic materials which comprises:

(a) sending the manufactured articles singly to an irradiation zone;

(b) irradiating each single manufactured article by an electromagnetic irradiation beam; and

(c) directing the manufactured articles to different destinations according to their adsorption or absorption of the electromagnetic irradiation.

The separation method of the present invention may be employed to separate by a chemically homogeneous way any type of manufactured articles made of plastic materials. The separation of manufactured articles made of polyolefine or polyester resins from manufactured articles made of halogenated resins and polymers is however the preferred one.

Examples of polyolefine resins are polyethylene, polypropylene, polystyrene, etc. Examples of polyester resins are polyethyleneterephthalate, polybutyleneterephthalate, etc. Examples of halogenated resins or polymers are polyvinylchloride, chlorinated rubbers, polymers and copolymers of vinylidene fluoride and/or tetrafluoroethylene, etc.

Preferred manufactured articles are those obtained by extrusion, injection, blow-molding, and thermoforming, such as bottles, containers, plates, films, etc., having an average thickness between 0.01 and 10 mm, and preferably between 0.05 and 5 mm.

The electromagnetic irradiation beam used to perform the method of the present invention may be either of the monpochromatic or polychromatic type and has a wavelength between 0.1 and $4.75 \times 10^{-8}$ cm for an irradiation carried out either in air or in vacuo, or between 40 and $70 \times 10^{-8}$ cm if the irradiation is carried out in vacuo.

Apparatus suitable for creating and transmitting the electromagnetic radiation beam may be a conventional X-ray tube having an outlet section of any desired geometric shape, for instance square, rectangular, circular, hexagonal, etc.

The area of the outlet section is greater than 0.1 mm$^2$ and is preferably between 0.5 and 100 mm$^2$.

The emission power of the X-ray tube may be higher than $10^{-2}$ watt, and is preferably between 1 and 3000 watts.

The electromagnetic radiation may be produced also by radioactive substances which emit gamma radiation ( $\gamma$ ) of an intensity higher than $10^3$ Bequerel (Bq), and preferably between $10^4$ and $10^9$ Bq.

Examples of suitable radioactive substances are radionuclides, preferably those having a half-life higher than 100 days and, more preferably, higher than 1 year, and having at least 5% of their $\gamma$ emission of energy lower than 150 kev, and preferably between 2.6 and 120 kev.

Examples of radionuclides useable for the process of the present invention are: americium 241, lead 210, curium 244, cadmium 109, iron 55, etc.

The possibility of discriminating manufactured articles made of halogenated resins is based on their greater capability of adsorption of the above mentioned electromagnetic radiation, in comparison with other non-halogenated resins such as polyester or polyolefine resins.

Furthermore, it is well known that the adsorption of the radiation by a material is dependent on its thickness and not only on its chemical nature; for instance, polyvinylchloride has an adsorption coefficient for unity thickness, which is about 10 times higher than that of polyester and about 20 times higher than that of polyolefines, when an electromagnetic radiation having a wavelength according to the present invention is used.

This means that manufactured articles made of polyester or of polyolefines having an average thickness, respectively, up to 8 times and up to 18 times higher than that of manufactured articles made of polyvinylchloride, have a total adsorption coefficient for the same electromagnetic radiation which is lower than that of these last-mentioned manufactured articles, and therefore they readily be separated by the method of the present invention.

This method may be used independently of the presence of thin particles which adhere to the manufactured articles (for instance labels), provided that these particles consist of organic and in⌐ :anic substances, excepting metals; it is not dependent on the transparency of manufactured articles and may also be used if the manufactured articles do not show a constant thickness.

The method of the present invention is performed by means of an apparatus for the separation of manufactured articles of plastic materials comprising:

(i) means for conveying separately the manufactured articles to an irradiation zone:

(ii) means for irradiating each manufactured article separately by an electromagnetic radiation beam;

(iii) means for measuring the radiation intensity radiation transmitted through each manufactured article separately; and

(iv) means for directing the manufactured articles to different destinations, joined, by means of a threshold comparator, to means described under item (iii).

Examples of means for conveying separately the manufactured articles to the irradiation zone are conveyor belts, including suspended conveyor belts provided with hooks or pliers for carrying objects.

Any means for irradiating the manufactured articles by electromagnetic radiations may be used in the apparatus of the present invention; examples of such means are X-ray tubes or radioactive substances.

Any system for detecting the intensity of the transmitting radiation may be used for the appratus of the present invention, although scintillation counters, proportional counters, Geiger counters, solid state detectors, etc., are preferred.

According to a preferred embodiment, the apparatus of the present invention comprises:

(i) a conveyor belt for passing each piece separately through an irradiation zone;

(ii) an irradiation system consisting of an X-ray tube or a radionuclide;

(iii) a system to detect the intensity of the transmitted radiation consisting of a scintillation counter, arranged in such a manner as to measure the intensity of the transmitted radiation through the manufactured article to be separated; and

(iv) an electromechanical system which, based on the intensity detected by means of a threshold comparator applied to the detector of the transmitted intensity, directs the manufactured articles to different destinations.

In order still better to understand the present invention and to practically perform the same, two illustrative examples are reported hereinafter, which however are not to be regarded as limiting the scope of the invention.

## Example 1

The intensities of the electromagnetic radiation transmitted through two manufactured articles (bottles) of polyester (PET) and of polyvinylchloride (PVC) are measured.

The radiation used is that produced by a conventional X-ray tube having a copper anticathode and screened by a nickel plate ($\lambda$ Cu,k = 1.5418 x $10^{-8}$ cm, accelerator potential = 40 kV, current = 20 mA).

The radiation was allowed to diffract, by reflection, on an NaCl monocrystal and the diffracted beam at the angle $2\theta$ = 31.78° was used.

The intensity of the diffracted beam was measured by means of a scintillation counter of the type Philips PW-1964/60, assigning a time constant of 0.04 second.

The beam was allowed to coincide with the following slits:

(a) at the outlet of the X-ray tube is located a system of Soller's type slits and a 1° slit;

(b) before the counter another Soller's type slit system is located and also a 0.1 mm slit.

Bottles were placed between the NaCl monocrystal and the counter and intensity values reported below in Table 1 (intensities measured by counting each second) were determined:

3

### Table 1

| Crossing position of the beam | Intensity of the transmitted radiation | |
| --- | --- | --- |
| | PTE Bottle | PVC Bottle |
| Bottle neck | 7100 | 10 |
| Middle Portion | 148000 | 1080 |
| Bottle Bottom | 85000 | 8700 |

### Example 2

The intensity of electromagnetic radiation transmitted through two manufactured articles (bottles) of PET and PVC.

The radiation was from an americium 241 source having an intensity of $3.7 \times 10^8$ Bq and $\gamma$ energy between 55 and 68 Kev, diffused through a circular hole having a diameter of 1 cm.

The intensity of the radiation transmitted is measured by means of a scintillation counter (Siemens) with an NaI crystal the window of which is placed at a distance of 15 cm from the outlet hole of the radiation.

Bottles are placed between the radioactive source and the scintillation counter and the detected transmitted intensities (counting each 10 seconds) are reported in Table 2:

### Table 2

| Crossing position of the beam | Intensity of the transmitted radiation | |
| --- | --- | --- |
| | PTE Bottle | PVC Bottle |
| Bottle Neck | 75 | 5 |
| Middle Portion | 855 | 25 |
| Bottle Bottom | 1130 | 27 |

### Claims

1. A method for the separation of manufactured articles of plastic materials which comprises:
    (a) sending the manufactured articles singly to an irradiation zone;
    (b) irradiating each manufactured article separately by an electromagnetic radiation beam; and
    (c) directing the manufactured articles to different destinations according to their adsorption of the electromagnetic radiation.

2. A method according to Claim 1, wherein manufactured articles of polyolefine or polyester resins are separated from manufactured articles of halogenated resins and polymers.

3. A method according to Claim 2, wherein polyolefine resins are polyethylene, polypropylene, polystyrene; polyester resins are polyethylene terephthalate and polybutyleneterephthalate; halogenated resins or polymers are polyvinylchloride, chlorinated rubbers, polymers and copolymers of vinylidene fluoride and of tetrafluoroethylene.

4. A method according to one or more of the claims 1 to 3, wherein the manufactured articles are those obtained by extrusion, injection, blow-molding, thermoforming, such as bottles, containers, plates, films, having an average thickness between 0.01 and 10 mm, e.g. between 0.055 and 5 mm.

5. A method according to one or more of the claims 1 to 4, wherein the beam of electromagnetic radiation is monochromatic or polychromatic with a wavelength between 0.1 and 4.75 x $10^{-8}$ cm, for irradiation carried out either in air or under vacuum.

6. A method according to one or more of the claims 1 to 4, wherein the beam of the electromagnetic radiation consists of gamma radiations ($\gamma$) having an intensity higher than $10^3$ Bequerel (Bq), and having at least 5% of their $\gamma$emission of energy lower than 150 kev,e.g. between 2.6 and 120 kev.

7. A method according to one or more of the claims 1 to 6, wherein manufactured articles of polyester or polyolefine have an average thickness, respectively, up to 8 times and 18 times higher than that of manufactured articles of polyvinylchloride.

8. Apparatus for the separation of manufactured articles of plastic materials comprising:

(i) means for conveying separately the manufactured articles to an irradiation zone;

(ii) means for irradiating each single manufactured article by an electromagnetic radiation beam;

(iii) means for measuring the intensity of the radiation transmitted through each single manufactured article; and

(iv) means for directing the manufactured articles to different destinations responsive to the measured intensities, said means (iv) being joined by means of a threshold comparator to the means of item (iii).

9. Apparatus according to Claim 8, wherein the means for conveying the manufactured articles separately to the irradiation zone is a conveyor belt, e.g. a suspended conveyor belt provided with hooks or pliers for carrying the manufactured articles.

10. Apparatus according to one or both of the claims 8 to 9, wherein the means for irradiating the manufactured articles is an X-ray tube.

11. Apparatus according to one or both of the claims 8 to 9, wherein the means for irradiating the manufactured articles consists of radionuclides having a half-life higher than 100 days, e.g. higher than 1 year.

12. Apparatus according to claim 11, wherein the radionuclides are selected from the class consisting of americium 241, lead 210, curium 244, cadmium 109, and iron 55.

13. Apparatus according to one or more of the claims 8 to 12, wherein the means for detecting the intensity of the transmitted radiation is selected from the class consisting of scintillation counters, proportional counters, Geiger counters, and solid state radiation detectors.

14. Apparatus according to one or more of the claims 8 to 12, comprising:

(i) a conveyor belt allowing each single manufactured article to pass through an irradiation zone;

(ii) an irradiation system consisting of an X-ray tube or a radionuclide;

(iii) a system for detecting the intensity of the radiation consisting of a scintillation counter, placed in such a manner as to measure the intensity of the radiation transmitted through the manufactured article to be separated; and

(iv) an electromechanical system operated by means of a threshold comparator joined electrically to the detector of the intensity of the transmitted radiation which allows the manufactured articles to be directed to different destinations according to the intensity of the transmitted radiation.